**Europäisches Patentamt**

**European Patent Office**

**Office européen des brevets**

(19)

(11) Veröffentlichungsnummer: **0 011 234**
**B1**

(12)

# EUROPÄISCHE PATENTSCHRIFT

(45) Veröffentlichungstag der Patentschrift:
**21.04.82**

(51) Int. Cl.³: **G 02 F 1/133**

(21) Anmeldenummer: **79104371.4**

(22) Anmeldetag: **07.11.79**

(54) **Passive elektro-optische Anzeigevorrichtung, Verfahren zum Ansteuern einer solchen Anzeigevorrichtung und deren Verwendung.**

(30) Priorität: **14.11.78 DE 2849381**

(43) Veröffentlichungstag der Anmeldung:
**28.05.80 Patentblatt 80/11**

(45) Bekanntmachung des Hinweises auf die Patenterteilung:
**21.04.82 Patentblatt 82/16**

(84) Benannte Vertragsstaaten:
**AT CH FR GB IT NL SE**

(56) Entgegenhaltungen:
**DE-A-2 163 634**
**NL-A-7 709 432**

(73) Patentinhaber: **SIEMENS AKTIENGESELLSCHAFT Berlin und München, Postfach 22 02 61, D-8000 München 22 (DE)**

(72) Erfinder: **Tauer, Karl M., Dipl.-Ing., Hohenwaldeckstrasse 20, D-8000 München 90 (DE)**

Passive elektro-optische Anzeigevorrichtung, Verfahren zum Ansteuern einer solchen
Anzeigevorrichtung und deren Verwendung

Die Erfindung betrifft eine Anzeigevorrichtung gemäß dem Oberbegriff des Anspruchs 1. Ein solches Display wird beispielsweise in der DE-OS 2 163 634 beschrieben.

Verschiedene Defekte, wie etwa Ausfälle einzelner Ansteuerleitungen, Unterbrechungen von Leiterbahnen, Kurzschlüsse innerhalb des Displays oder bestimmte Störungen in der Ansteuerelektronik, führen zu einer fehlerhaften Anzeige. Erscheint dabei statt des richtigen Zeichens ein anderes mögliches Symbol, so läßt sich die Verfälschung nicht als solche erkennen, ein Umstand, der insbesondere bei geeichten Instrumenten nicht hingenommen werden kann.

Erzeugt die Anzeigevorrichtung ihr eigenes Licht, so sind die erforderlichen Stromstärken im allgemeinen so hoch, daß man die Darstellung durch eine Messung der Segmentströme kontrollieren könnte. Dieser Weg ist jedoch bei Displays, die lediglich Fremdlicht modulieren und entsprechend wenig Energie verbrauchen, nicht gangbar. So erhielten Flüssigkristallanzeigen bislang in aller Regel redundante oder noch feinere Segmentierungen (DE-OS 2 402 749 bzw. DE-OS 2 459 488), wenn man verschleierte Falschinformationen verhindern wollte. Es liegt auf der Hand, daß derartige Vorkehrungen die Fertigung wie auch die Ansteuerung erheblich belasten.

Der Erfindung liegt die Aufgabe zugrunde, ein passives elektro-optisches Display zu entwickeln, das im Betrieb entweder den richtigen Zahlenwert oder aber eine sinnlose Konfiguration zur Darstellung bringt. Zur Lösung dieser Aufgabe werden erfindungsgemäß zwei Alternativen vorgeschlagen, deren Merkmale in den Patentansprüchen 1 bzw. 4 angegeben sind.

Bei den beiden vorgeschlagenen Varianten ist die Gruppierung der Segmentelektroden fest vorgegeben, während es für die Zweiteilung der Rückelektrode jeweils mehrere, bei Bedarf ohne weiteres ermittelbare Möglichkeiten gibt. Beispiele für eine zweckmäßige Rückelektroden-Auftrennung sind in den Ansprüchen 3 bzw. 6 charakterisiert.

Eine Sieben-Segment-Darstellung mit einer unterteilten Rückelektrode und zu größeren Einheiten zusammengefaßten Segmentelektroden wird an sich seit längerem diskutiert, allerdings ausschließlich mit dem Ziel, eine Matrixansteuerung und allenfalls noch eine einfache Leitungsführung zu ermöglichen (vgl. hierzu neben der eingangs zitierten Offenlegungsschrift die DE-OS 2 604 238, »Electronics« vom 25. Mai 1978, S. 113 bis 121, oder »Electron« vom 15. September 1977, S. 48 bis 55). Dementsprechend ist auch bei keiner der bisher vorgeschlagenen Elektrodengruppierungen der Betrachter vor Ableseirrtümern geschützt. Dies gelingt, wie eine eingehende Analyse ergeben hat, in der Tat dann und nur dann, wenn die Elektrodenmatrix in der hier vorgeschlagenen Weise organisiert ist.

Vorteilhafte Ausgestaltungen und Weiterbildungen des Lösungsvorschlags sind Gegenstand weiterer Ansprüche.

Die Erfindung soll nun anhand zweier besonders geeigneter Ausführungsbeispiele in Verbindung mit der beigefügten Zeichnung näher erläutert werden. In den Figuren sind einander entsprechende Teile mit gleichen Bezugszeichen versehen. Es zeigt

Fig. 1 ein erstes Ausführungsbeispiel in einem Seitenschnitt,

Fig. 2 das Ausführungsbeispiel der Fig. 1 in einer Vorderansicht,

Fig. 3 die von dem Ausführungsbeispiel der Fig. 1 angezeigten Konfigurationen bei Ausfall einzelner Segmentpaare oder Rückelektroden,

Fig. 4 ein weiteres Ausführungsbeispiel in einer Vorderansicht und

Fig. 5 die von dem zweiten Ausführungsbeispiel angezeigten Konfigurationen bei Ausfall einzelner Segmentpaare oder Rückelektroden.

Die Zeichnung ist etwas schematisch gehalten. So sind Einzelheiten, die für ein Verständnis der Erfindung nicht unbedingt benötigt werden, wie etwa die elektrischen Zuleitungen, teilweise oder auch ganz weggelassen worden.

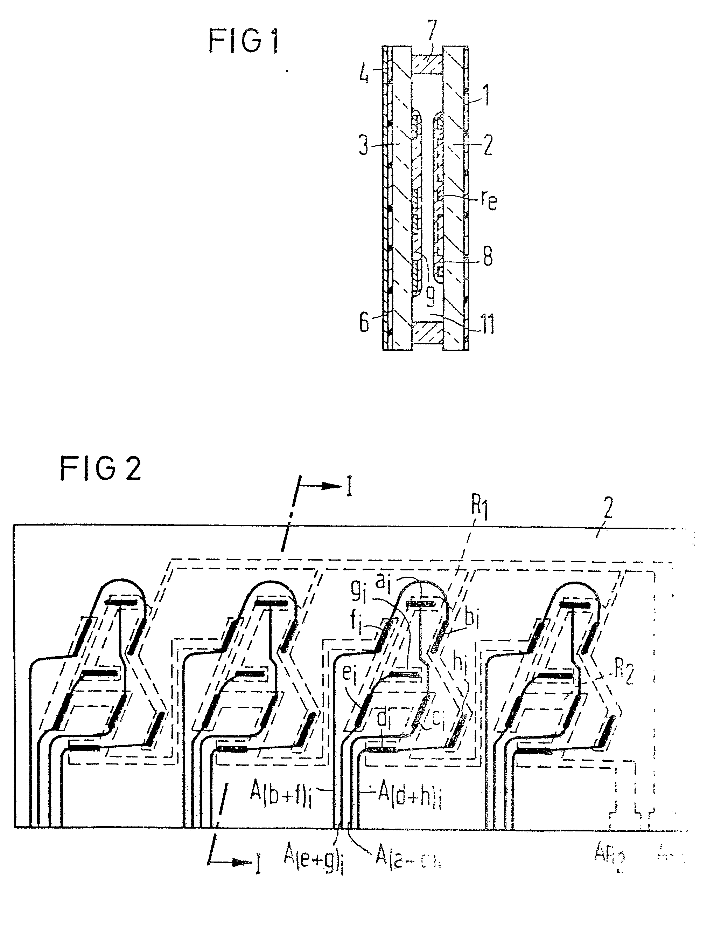

Das Display der Fig. 1 ist eine Flüssigkristallanzeige, die nach dem Prinzip der sogenannten »Drehzelle« arbeitet und eine vierstellige Zahl darstellen kann. Die Anzeige besteht im einzelnen aus einem vorderen Linearpolarisator 1, einer vorderen Trägerplatte 2, einer hinteren Trägerplatte 3, einem hinteren, zum vorderen gekreuzten Linearpolarisator 4 und einem Reflektor 6. Die beiden Trägerplatten sind über einen Rahmen 7 in einem bestimmten Abstand dicht miteinander verbunden und tragen auf ihren einander zugewandten Innenflächen jeweils elektrisch leitfähige Beläge sowie Orientierungsschichten 8, 9. Die von den beiden Substraten und dem Rahmen begrenzte Kammer ist mit einer Flüssigkristallschicht 11 gefüllt. Eine mehr ins einzelne gehende Darstellung einer Drehzelle ist in der DE-AS 2 358 563 zu finden.

Aus der Fig. 2 geht hervor, wie die elektrisch leitenden Beläge gestaltet sind. Zu jeder der vier Stellen gehören acht Vorderelektroden und zwei Rückelektroden. Die Vorderelektroden setzen sich zusammen aus sieben Segmentelektroden (obere, mittlere und untere Querelektrode $a_i$, $g_i$ und $d_i$; linke obere, rechte obere, linke untere und rechte untere Längselektrode $f_i$, $b_i$, $e_i$ und $c_i$), die zusammen eine »8« bilden, und aus einer Kommaelektrode $h_i (1 \leq i \leq 4)$. Von den acht Vorderelektroden sind jeweils zwei elektrisch miteinander verbunden, nämlich die Elektroden $a_i$ und $c_i$, $b_i$ und $f_i$, $e_i$ und $g_i$ sowie $d_i$ und $h_i$. Die beiden Rückelektroden sind so bemessen, daß die eine (Rückelektrode $R_{1i}$) den Vorderelektroden $a_i$, $b_i$, $g_i$ und $h_i$ und daß die andere Rückelektrode ($R_{2i}$) den Vorderelektroden $c_i$, $e_i$, $f_i$

und $d_i$ gegenüberliegt.

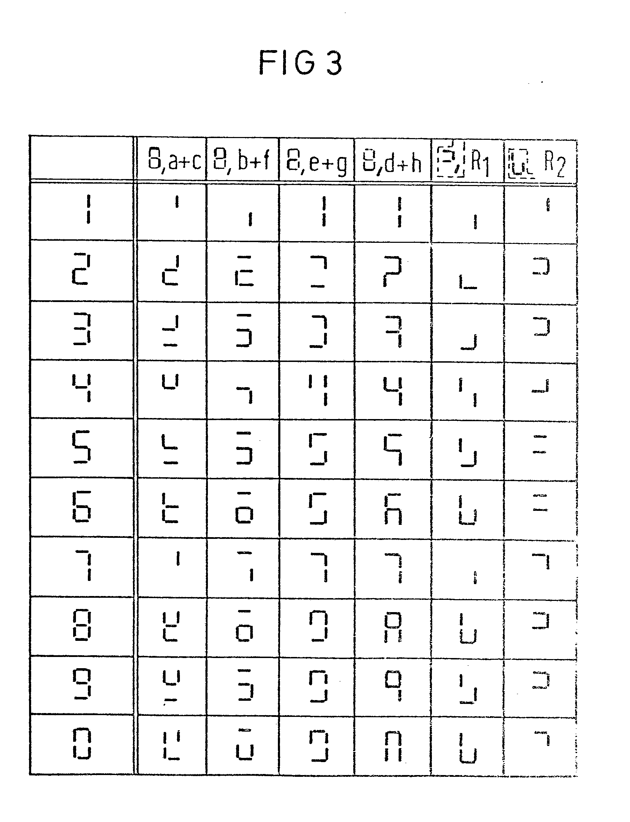

Die Fig. 3 gibt an, welche Segmentkonfigurationen zur Anzeige kommen, wenn einzelne Segmentpaare oder Rückelektroden ausfallen. In der ersten Spalte des Tableaus sind die gewünschten (»richtigen«) Ziffern von eins bis neun untereinander aufgeführt. In den folgenden Spalten sind jeweils diejenigen Zeichen eingetragen, die sich statt der richtigen Zahlen einstellen, wenn die Paare $a+c$ (2. Spalte), $b+f$ (3. Spalte), $e+g$ (4. Spalte), $d+h$ (5. Spalte) oder die Rückelektroden $R_1$ bzw. $R_2$ (6. bzw. 7. Spalte) keine ausreichende Spannung erhalten. Man erkennt, daß entweder nach wie vor die gewünschten Ziffern oder aber unverständliche Symbole erscheinen. Die Anzeige ist also eichfähig.

Im geschilderten Beispiel sind die vier ersten Rückelektroden auf einen gemeinsamen Anschluß ($A_{R1}$) und die vier zweiten Rückelektroden ihrerseits auf einen gemeinsamen Anschluß ($A_{R2}$) geführt. Es entsteht eine Matrix mit zwei Rückelektrodenanschlüssen und sechzehn Vorderelektrodenanschlüssen ($A_{(a+c)i}$, $A_{(b+f)i}$, $A_{(e+g)i}$ und $A_{(d+h)i}$), die sich folgendermaßen in einem Zwei-Schritt-Multiplexverfahren adressieren läßt:

In einem ersten Takt gibt man auf den einen Rückelektrodenanschluß eine Adressierspannung und legt zugleich an die sechzehn Vorderelektrodenanschlüsse Signalspannungen. In einem zweiten Takt steuert man den zweiten Rückelektrodenanschluß an und beaufschlagt wiederum sämtliche sechzehn Vorderelektrodenanschlüsse mit den erforderlichen Signalen.

Die Elektroden jeder Stelle ließen sich auch auf andere Weise miteinander verknüpfen. So könnte man statt einander entsprechende Rückelektroden die einander entsprechenden Vorderelektroden bzw. Vorderelektrodenpaare miteinander verbinden, so daß neben den einzelnen Rückelektrodenanschlüssen ($A_{(R1)i}$, $A_{(R2)i}$) vier gemeinsame Vorderelektrodenanschlüsse ($A_{a+c}$, $A_{b+f}$, $A_{e+g}$ und $A_{d+h}$) entstehen. Eine solche Matrix ließe sich in einem Vier-Schritt-Multiplexverfahren ansteuern, und zwar auf folgende Weise:

Man adressiert nacheinander die vier gemeinsamen Vorderelektrodenanschlüsse und versieht zu jeder der vier Adressierzeiten die acht einzelnen Rückelektrodenanschlüsse mit den entsprechenden Signalen.

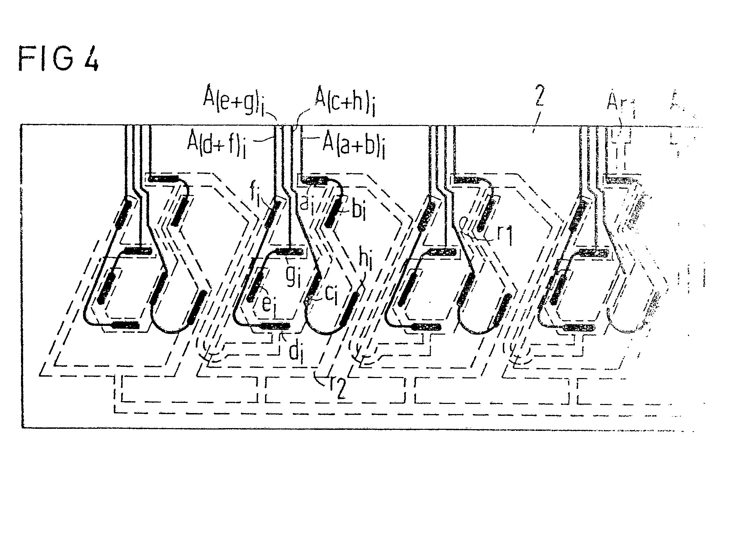

Das zweite Ausführungsbeispiel, dessen Voransicht in Fig. 4 dargestellt ist, weicht von der ersten Ausführung sowohl in der Verknüpfung der Segmentelektroden als auch in der Bemessung der Rückelektroden ab. Folgende Vorderelektroden bilden jeweils ein Paar: $a+b$, $d+f$, $e+g$ sowie $c+h$. Von den beiden Rückelektroden liegt die eine (erste Rückelektrode $r_1$) den Vorderelektroden $a$, $c$, $d$ und $e$ gegenüber, während die andere (zweite Rückelektrode $r_2$) die Gegenelektrode zu den Vorderelektroden $b$, $f$, $g$ und $h$ bildet.

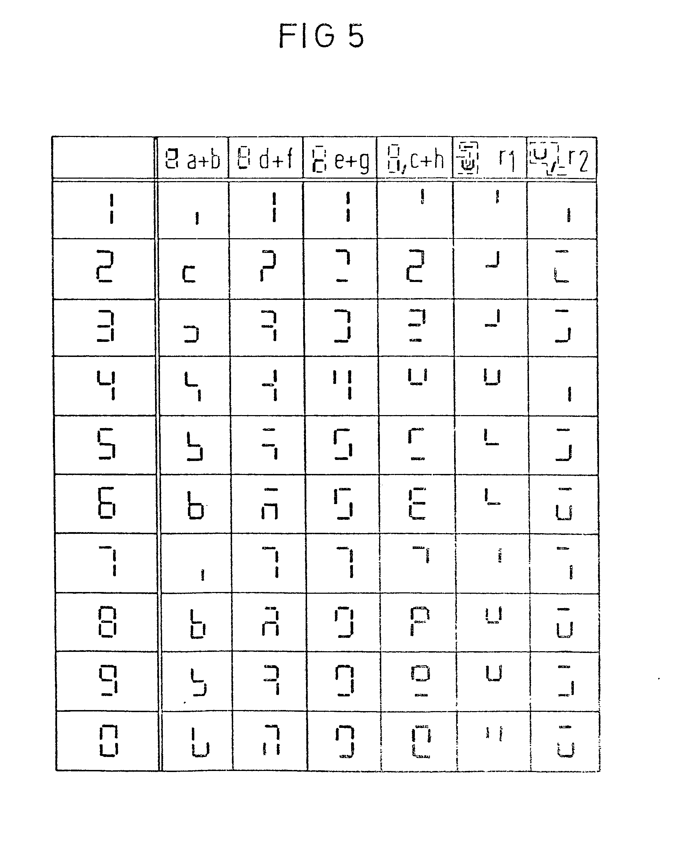

Der Fig. 5, die wie die Fig. 3 aufgebaut ist, entnimmt man, daß auch bei der zweiten Variante entweder nur die richtigen Ziffern oder aber sinnlose Zeichen angezeigt werden. Voraussetzung hierzu ist allerdings, daß die Ziffer »6« nur dann als korrekt dargestellt gilt, wenn auch der obere Querstrich erscheint.

Die Variante II läßt sich genauso wie die Variante I in einem Zwei-Schritt- oder in einem Vier-Schritt-Multiplexverfahren adressieren, je nachdem, ob man die einander entsprechenden Rückelektroden oder die Vorderelektroden bzw. Vorderelektrodenpaare mit einem gemeinsamen Anschluß versieht.

Die Erfindung ist nicht auf die dargestellten Ausführungsbeispiele beschränkt. So könnte die darzustellende Zahl auch weniger oder mehr als vier Stellen enthalten, da die Stellenzahl ohne Belang ist. Davon abgesehen kommen neben einer Flüssigkristallanzeige aber auch andere elektro-optische Displays infrage, bei denen eine Segmentstromüberwachung unmöglich oder nicht ratsam ist.

## Patentansprüche

1. Passive elektro-optische Anzeigevorrichtung zur Sieben-Segment-Darstellung einer mindestens einstelligen Zahl, enthaltend

1) eine Vorderplatte und eine Rückplatte,
2) ein zwischen zwei optisch verschiedenen Zuständen schaltbares Medium, insbesondere eine Flüssigkristallschicht, zwischen den beiden Platten und
3) elektrisch leitende Beläge (Elektroden) auf den Innenseiten der beiden Platten, wobei jeder Stelle der Zahl
    a) sieben Elektroden (Segmentelektroden), nämlich eine obere, a genannte, mittlere, g genannte, und untere, d genannte, Querelektrode, eine linke obere, f genannte, eine rechte obere, b genannte, eine linke untere, e genannte, und eine rechte untere, c genannte, Längselektrode, auf der einen Platte und
    b) zwei Elektroden (Rückelektroden) auf der anderen der beiden Platten zugeordnet sind und wobei von diesen Elektroden
    c) die beiden Rückelektroden, eine Segmentelektrode sowie drei Paare aus je zwei elektrisch miteinander verbundenen Segmentelektroden jeweils getrennt ansteuerbar sind,

dadurch gekennzeichnet, daß

4) die Segmentelektroden a und c, b und f sowie e und g jeweils ein Paar bilden.

2. Anzeigevorrichtung nach Anspruch 1, bei der zur Darstellung eines Kommas oder eines Punktes neben den einzelnen Stellen der Zahl außer den sieben Segmentelektroden eine weitere Vorderelektrode, h genannt, auf der Vorderplatte vorgesehen ist, der eine der beiden Rückelektroden gegenüberliegt, dadurch gekennzeichnet, daß die Komma-Vorderelektrode h mit der Segmentelektrode d zu einem weiteren Elektrodenpaar elektrisch verbunden ist.

3. Anzeigevorrichtung nach Anspruch 1 oder 2, dadurch gekennzeichnet, daß eine der beiden Rückelektroden (erste Rückelektrode $R_1$) den Segmentelektroden a, b, g und gegebenenfalls h gegenüberliegt und die andere der beiden Rückelektroden (zweite Rückelektrode $R_2$) den Segmentelektroden c, e, f und d gegenüberliegt.

4. Passive elektro-optische Anzeigevorrichtung zur Sieben-Segment-Darstellung einer mindestens einstelligen Zahl, enthaltend

1)    eine Vorderplatte und eine Rückplatte,

2)    ein zwischen zwei optisch verschiedenen Zuständen schaltbares Medium, insbesondere eine Flüssigkristallschicht, zwischen den beiden Platten und

3)    elektrisch leitende Beläge (Elektroden) auf den Innenseiten der beiden Platten, wobei jeder Stelle der Zahl

     a)    sieben Elektroden (Segmentelektroden), nämlich eine obere, a genannte, mittlere, g genannte, und untere, d genannte, Querelektrode, eine linke obere, f genannte, eine rechte obere, b genannte, eine linke untere, e genannte, und eine rechte untere, c genannte, Längselektrode, auf der einen Platte und

     b)    zwei Elektroden (Rückelektroden) auf der anderen der beiden Platten zugeordnet sind und wobei von diesen Elektroden

     c)    die beiden Rückelektroden, eine Segmentelektrode sowie drei Paare aus je zwei elektrisch miteinander verbundenen Segmentelektroden jeweils getrennt ansteuerbar sind,

dadurch gekennzeichnet, daß

4)    die Segmentelektroden a und b, d und f sowie e und g jeweils ein Paar bilden.

5. Anzeigevorrichtung nach Anspruch 4, bei der zur Darstellung eines Kommas oder eines Punktes neben den einzelnen Stellen der Zahl außer den sieben Segmentelektroden eine weitere Vorderelektrode, h genannt, auf der Vorderplatte vorgesehen ist, der eine der beiden Rückelektroden gegenüberliegt, dadurch gekennzeichnet, daß die Komma-Vorderelektrode h mit der Segmentelektrode c zu einem weiteren Elektrodenpaar elektrisch verbunden ist.

6. Anzeigevorrichtung nach Anspruch 4 oder 5, dadurch gekennzeichnet, daß die eine der beiden Rückelektroden (erste Rückelektrode $r_1$) den Segmentelektroden a, c, d und e gegenüberliegt und die andere der beiden Rückelektroden

(zweite Rückelektrode $r_2$) den Segmentelektroden b, f, g und gegebenenfalls h gegenüberliegt.

7. Anzeigevorrichtung nach einem der Ansprüche 1 bis 6, zur Darstellung einer Zahl mit n Stellen, dadurch gekennzeichnet, daß die einander entsprechenden Rückelektroden jeder Stelle ($R_{1i}$ bzw. $R_{2i}$, $r_{1i}$ bzw. $r_{2i}$, $1 \leq i$, $j \leq n$) auf einen gemeinsamen Anschluß ($A_{R1}$ bzw. $A_{R2}$, $A_{r1}$ bzw. $A_{r2}$) geführt sind.

8. Anzeigevorrichtung nach einem der Ansprüche 1 bis 6 zur Darstellung einer Zahl mit n Stellen, dadurch gekennzeichnet, daß die einander entsprechenden n Vorderelektroden bzw. Vorderelektrodenpaare jeder Stelle [$(a+c)_i$ bzw. $(b+f)_j$ bzw. $(e+g)_k$ bzw. $(d+h)_l$, $(a+b)_i$ bzw. $(d+f)_i$ bzw. $(e+g)_j$ bzw. $(c+h)_i$, mit $1 \leq i,k,l \leq n$) auf einen gemeinsamen Anschluß ($A_{a+c}$ bzw. $A_{b+f}$ bzw. $A_{e+g}$ bzw. $A_{d+h}$, $A_{a+b}$ bzw. $A_{d+f}$ bzw. $A_{e+g}$ bzw. $A_{c+h}$) geführt sind.

9. Verfahren zur Ansteuerung einer Anzeigevorrichtung nach Anspruch 7, dadurch gekennzeichnet, daß in einem Zwei-Schritt-Multiplexverfahren die zwei Anschlüsse der ersten und zweiten Rückelektroden ($A_{R1}$, $A_{R2}$; $A_{r1}$, $A_{r2}$) zeitlich nacheinander Adressierspannungen erhalten und daß während der Adressierzeiten die Anschlüsse der einzelnen Vorderelektroden bzw. Vorderelektrodenpaare ($A_{(a+c)i}$, $A_{(b+f)j}$, $A_{(e+g)k}$, $A_{(d+k)l}$; $A_{(a+b)i}$, $A_{(d+f)i}$, $A_{(e+g)k}$, $A_{(c+h)l}$; mit $1 \leq i,j,k,l \leq n$) mit den zugehörigen Signalspannungen beaufschlagt werden.

10. Verfahren zur Ansteuerung einer Anzeigevorrichtung nach Anspruch 8, dadurch gekennzeichnet, daß in einem Vier-Schritt-Multiplexverfahren die vier Anschlüsse der einander entsprechenden Vorderelektroden bzw. Vorderelektrodenpaare ($A_{a+c}$, $A_{b+f}$, $A_{e+g}$, $A_{d+h}$; $A_{a+b}$, $A_{d+f}$, $A_{e+g}$, $A_{c+h}$) zeitlich nacheinander Adressierspannungen erhalten und daß während der Adressierzeiten die Anschlüsse der einzelnen Rückelektroden ($A_{(R1)i}$, $A_{(R1)j}$; $A_{(r1)i}$, $A_{(r2)j}$; mit $1 \leq i,j \leq n$) mit den zugehörigen Signalspannungen beaufschlagt werden.

11. Verwendung einer Anzeigevorrichtung nach einem der Ansprüche 1 bis 8 in geeichten Instrumenten wie Meßgeräten oder Waagen.

## Claims

1. A passive electro-optical display device for the seven-segment representation of a number, which has at least one digit, comprising

1)    a front plate and a rear plate,

2)    a medium, in particular a liquid crystal layer, which can be switched between two optically different states, between the two plates, and

3)    electrically-conducting coatings (electrodes) on the inner faces of the two plates, wherein each digit of the number is assigned

     a)    seven electrodes (segment electrodes), namely an upper transverse electrode which is referenced a, a central transverse electrode which is referenced g and a lower transverse electrode which is referenced d, a left upper longitudinal electrode which is referenced f, a right upper longitudinal electrode which is referenced b, a left lower longitudinal electrode which is referenced e and a right lower longitudinal electrode which is referenced c, on the one plate, and

b) two electrodes (rear electrodes) on the other of the two plates, and wherein of these electrodes,

c) the two rear electrodes, one segment electrode and three pairs which respectively consist of two segment electrodes which are electrically connected to one another can be individually operated,

characterised in that

4) the segment electrodes a and c, b and f and e and g form respective pairs.

2. A display device as claimed in Claim 1, wherein in order to represent a comma or a fullstop beside the individual digits of the number, in addition to the seven segment electrodes, there is arranged on the front plate, a further front electrode, which is referenced h, and which faces one of the two rear electrodes, characterised in that the comma front electrode h is electrically connected to the segment electrode d to form a further electrode pair.

3. A display device as claimed in Claim 1 or Claim 2, characterised in that one of the two rear electrodes (first rear electrode $R_1$) faces the segment electrodes a, b, g and possibly h and the other of the two rear electrodes (second rear electrode $R_2$) faces the segment electrodes c, e, f and d.

4. A passive electro-optical display device for the seven-segment representation of a number which has at least one digit, comprising

1) a front plate and a rear plate,
2) a medium, in particular a liquid crystal layer, which can be switched between two optically different states, between the two plates, and
3) electrically-conducting coatings (electrodes) on the inner faces of the two plates, wherein each digit of the number is assigned
   a) seven electrodes (segment electrodes), namely an upper transverse electrode which is referenced a, a central transverse electrode which is referenced g and a lower transverse electrode which is referenced d, a left upper longitudinal electrode which is referenced f, a right upper longitudinal electrode which is referenced b, a left lower longitudinal electrode which is referenced e and a right lower longitudinal electrode which is referenced c, on the one plate, and

b) two electrodes (rear electrodes) on the other of the two plates, and wherein, of these electrodes,

c) the two rear electrodes, one segment electrode and three pairs which respectively consist of two segment electrodes which are electrically connected to one another, can be individually operated,

characterised in that,

4) the segment electrodes a and b, d and f and e and g form respective pairs.

5. A display device as claimed in Claim 4, wherein in order to represent a comma or a fullstop beside the individual digits of the numer, in addition to the seven-segment electrodes, there is arranged on the front plate, a further front electrode, which is referenced h, and which faces one of the two rear electrodes, characterised in that the comma front electrode h is electrically connected to the segment electrode c to form a further electrode pair.

6. A display device as claimed in Claim 4 or Claim 5, characterised in that the one of the two rear electrodes (first rear electrode $r_1$) faces the segment electrodes a, c, d and e and the orther one of the two rear electrodes (second rear electrode $r_2$) faces the segment electrodes b, f, g and possibly h.

7. A display device as claimed in one of Claims 1 to 6, for the representation of a number with n digits, characterised in that the n rear electrodes of each digit, which vorrespond to one another, ($R_{1i}$ or $R_{2i}$, $r_{1i}$ or $r_{2i}$, $1 \leq i,j \leq n$) are led to a common terminal ($A_{R1}$ or $A_{R2}$, $A_{r1}$ or $A_{r2}$).

8. A display device as claimed in one of Claims 1 to 6, for the representation of a number with n digits, characterised in that the n front electrodes and pairs of front electrodes of each digit which correspond to one another, $[(a+c)_i$ or $(b+f)_j$ or $(e+g)_k$ or $(d+h)_l$, $(a+b)_i$ or $(d+f)_j$ or $(e+g)_i$ or $(c+h)_i$ with $1 \leq i,j,k,l \leq n]$ are led to a common terminal ($A_{a+c}$ or $A_{b+f}$ or $A_{e+g}$ or $A_{d+h}$, $A_{a+b}$ or $A_{d+f}$ or $A_{e+g}$ or $A_{c+h}$).

9. A method of operating a display device as claimed in Claim 7, characterised in that in a two-step multiplex process, the two terminals of the first and second rear electrodes ($A_{R1}$, $A_{R2}$; $A_{r1}$, $A_{r2}$) receive addressing voltages consecutively in time, and that during the addressing times, the terminals of the individual front electrodes and pairs of front electrodes ($A_{(a+c)i}$, $A_{(b+f)j}$, $A_{(e+g)k}$, $A_{(a+b)i}$; $A_{(d+f)i}$, $A_{(e+g)k}$, $A_{(c+h)l}$ with $1 \leq i,j,k,l \leq n)$ are fed with the appropriate signal voltages.

10. A method for operating a display device as claimed in Claim 8, characterised in that in a four-step multiplex process, the four terminals of the front electrodes and pairs of front electrodes which correspond to one another ($A_{a+c}$, $A_{b+f}$, $A_{e+g}$, $A_{d+h}$; $A_{a+b}$, $A_{d+f}$, $A_{e+g}$, $A_{c+h}$) receive

addressing voltages consecutively in time, and that during the addressing times, the terminals of the individual rear electrodes ($A_{(R1)i}$, $A_{(R1)j}$; $A_{(r1)i}$, $A_{(r2)j}$; with $1 \leq i,j \leq n$) are supplied with the appropriate signal voltages.

11. The use of a display device as claimed in one of Claims 1 to 8 in graduated instruments such as measuring or weighing devices.

## Revendications

1. Dispositif d'affichage électrooptique passif pour représenter avec sept segments un nombre à au moins un chiffre, du type comportant

1) une plaque antérieure et une plaque postérieure,
2) un milieu commutable entre deux états optiques différents, plus particulièrement une couche de cristal liquide, disposée entre les deux plaques, et
3) des revêtements électriquement conducteurs (électrodes) sur les faces intérieures des deux plaques, à chaque chiffre étant associées
     a) sept électrodes (électrodes en forme de segments) sur une plaque, plus particulièrement une électrode transversale supérieure, dite électrode a, médiane, dite électrode g et inférieure, dite électrode d, une électrode longitudinale supérieure gauche dite électrode f, supérieure droite dite électrode b, inférieure gauche dite électrode e et inférieure droite dite électrode c et
     b) deux électrodes (électrodes postérieures) sur l'autre plaque, électrodes parmi lesquelles
     c) les deux électrodes postérieures, une électrode en forme de segment ainsi que trois paires d'électrodes en forme de segments, constituées chacune par deux électrodes en forme de segments et reliées électriquement entre elles, étant susceptibles d'être commandées séparément,

caractérisé par le fait que les électrodes en forme de segments a et c, b et f ainsi que e et g forment respectivement une paire.

2. Dispositif d'affichage selon la revendication 1, du type dans lequel, en vue de représenter une virgule ou un point, on prévoit en plus des différents chiffres du nombre, outre les sept électrodes en forme de segments, une électrode antérieure supplémentaire, dite électrode h sur la plaque antérieure, électrode supplémentaire qui est située en face de l'une des électrodes postérieures, caractérisé par le fait que l'électrode antérieure h correspondant à la virgule est reliée électriquement à l'électrode d en forme de segment pour constituer une paire supplémentaire d'électrodes.

3. Dispositif d'affichage selon la revendication 1 ou 2, caractérisé par le fait que l'une des deux électrodes postérieures (première électrode postérieure $R_1$) est située en face des électrodes en forme de segments a, b, g et éventuellement h et l'autre des deux électrodes postérieures (seconde électrode postérieure $R_2$) est située en face des électrodes en forme de segments c, e, f et d.

4. Dispositif d'affichage électrooptique passif pour représenter avec sept segments un nombre à un chiffre, du type comportant

1) une plaque antérieure et une plaque postérieure,
2) un milieu commutable entre deux états optiques différents, plus particulièrement une couche de cristal liquide, disposée entre les deux plaques, et
3) des revêtements électriquement conducteurs (électrodes) sur les faces intérieures des deux plaques, à chaque chiffre étant associées
     a) sept électrodes (électrode en forme de segments) sur une plaque, plus particulièrement une électrode transversale supérieure, dite électrode a, médiane dite électrode g et inférieure, dite électrode d, une électrode longitudinale supérieure gauche dite électrode f, supérieure droite dite électrode b, inférieure gauche dite électrode e et inférieure droite dite électrode c et
     b) deux électrodes (électrodes postérieures) sur l'autre plaque, électrodes parmi lesquelles
     c) les deux électrodes postérieures, une électrode en forme de segment ainsi que trois paires d'électrodes en forme de segments, constituées chacune par deux électrodes en forme de segments et reliées électriquement entre elles, étant susceptibles d'être commandées séparément,

caractérisé par le fait que les électrodes en forme de segments a et b, d et f ainsi que e et g consituent respectivement une paire.

5. Dispositif d'affichage selon la revendication 4, du type dans lequel, en vue de représenter une virgule ou un point, on prévoit en plus des différents chiffres du nombre, outre les sept électrodes en forme de segments, une électrode antérieure supplémentaire, dite électrode h sur la plaque antérieure, électrode supplémentaire qui est située en face de l'une des électrodes postérieures, caractérisé par le fait que l'électrode antérieure h représentative de la virgule, est reliée électriquement à l'électrode c en forme de segment pour constituer une paire supplémentaire d'électrodes.

6. Dispositif d'affichage selon la revendication 4 ou 5, caractérisé par le fait que l'une des deux électrodes postérieures (première électrode postérieure $r_1$) est située en face des électrodes en forme de segments a, c, d et e et l'autre des deux électrodes postérieures (seconde électrode postérieure $r_2$) est située en face des électrodes en forme de segments b, f, g et éventuellement h.

7. Dispositif d'affichage selon l'une des revendications 1 à 6, pour la représentation d'un nombre à n chiffres, caractérisé par le fait que les n électrodes postérieures de chaque chiffre ($R_{1i}$ ou $R_{2i}$, $r_{1i}$ ou $r_{2i}$, $1 \leq i, j \leq n$) et qui se correspondent entre elles, sont ramenées à une borne commune ($A_{R1}$ ou $A_{R2}$, $A_{r1}$ ou $A_{r2}$).

8. Dispositif d'affichage selon l'une des revendications 1 à 6, pour la représentation d'un nombre à n chiffres, caractérisé par le fait que les n électrodes antérieures ou n paires d'électrodes antérieures de chaque chiffre [$(a+c)_i$ ou $(b+f)_j$ ou $(e+g)_k$ ou $(d+h)_l$, $(a+b)_i$ ou $(d+f)_i$ ou $(e+g)_i$ ou $(c+h)_i$, avec $1 \leq i,j,k,l \leq n$] et qui se correspondent entre elles sont ramenées à une borne commune ($A_{a+c}$ ou $A_{b+f}$ ou $A_{e+g}$ ou $A_{d+h}$, $A_{a+b}$ ou $A_{d+f}$ ou $A_{e+g}$ ou $A_{c+h}$).

9. Procédé de commande d'un dispositif d'affichage selon la revendication 7, caractérisé par le fait que dans un procédé multiplex à deux pas, les deux bornes de la première et de la seconde électrodes postérieures ($A_{R1}$, $A_{R2}$; $A_{r1}$, $A_{r2}$), reçoivent successivement dans le temps des tensions d'adressage et par le fait que pendant les durées d'adressage, les bornes des différentes électrodes ou paires d'électrodes antérieures ($A_{(a+c)i}$, $A_{(b+f)j}$, $A_{(e+g)k}$, $A_{(d+k)l}$; $A_{(a+b)i}$, $A_{(d+f)i}$, $A_{(e+g)k}$, $A_{(c+h)l}$; avec $1 \leq i,j,k,l \leq n$) sont chargées avec les tensions des signaux correspondants.

10. Procédé pour commander un dispositif d'affichage selon la revendication 8, caractérisé par le fait que dans un procédé multiplex à quatre pas, les quatre bornes des électrodes ou paires d'électrodes antérieures qui se correspondent ($A_{a+c}$, $A_{b+f}$, $A_{e+g}$, $A_{d+h}$, $A_{a+b}$, $A_{d+f}$, $A_{e+g}$, $A_{c+h}$) reçoivent successivement dans le temps des tensions d'adressage et que pendant les durées d'adressage, les bornes des différentes électrodes postérieures ($A_{(R1)i}$, $A_{(R1)j}$; $A_{(r1)i}$, $A_{(r2)j}$; avec $1 \leq i,j \leq n$) reçoivent les tensions de signaux correspondantes.

11. Mise en oeuvre d'un dispositif d'affichage selon l'une des revendications 1 à 8, dans des appareils étalonnés tels qu'appareils de mesure ou bascules.

FIG 1

FIG 2

# FIG 3

| | 8,a+c | 8, b+f | 8,e+g | 8,d+h | R₁ | R₂ |
|---|---|---|---|---|---|---|
| 1 | | | | | | |
| 2 | | | | | | |
| 3 | | | | | | |
| 4 | | | | | | |
| 5 | | | | | | |
| 6 | | | | | | |
| 7 | | | | | | |
| 8 | | | | | | |
| 9 | | | | | | |
| 0 | | | | | | |

FIG 4

# FIG 5

| | a+b | d+f | e+g | c+h | r1 | r2 |
|---|---|---|---|---|---|---|
| 1 | | | | | | |
| 2 | | | | | | |
| 3 | | | | | | |
| 4 | | | | | | |
| 5 | | | | | | |
| 6 | | | | | | |
| 7 | | | | | | |
| 8 | | | | | | |
| 9 | | | | | | |
| 0 | | | | | | |